# EUROPEAN PATENT APPLICATION

(11) **EP 4 818 236 A1**
(43) Date of publication of application: **07.10.2026**
(21) Application number: 24897251.5
(22) Date of filing: 08.11.2024
(51) Int. Cl.: C08J 5/18, B29C 55/02, C08F 8/50, C08L 23/10

(54) **POLYPROPYLENE COMPOSITION FOR STRETCHED FILM AND STRETCHED FILM CONTAINING SAME**

(30) Priority: 28.11.2023 JP 2023200863; 28.10.2024 JP 2024188853
(71) Applicant: Japan Polypropylene Corporation, Tokyo 100-8251 (JP)
(72) Inventor: UCHIDA Tomoki, Yokkaichi-shi, Mie 510-0848 (JP); KANO Kenji, Yokkaichi-shi, Mie 510-0848 (JP); YAMANAKA Yuichi, Yokkaichi-shi, Mie 510-0848 (JP); KAWASAKI Daishi, Yokkaichi-shi, Mie 510-0848 (JP)
(74) Representative: Hoffmann Eitle
(86) International application number: PCT/JP2024/039800
(87) International publication number: WO 2025/115564

(57) **Abstract**

Provided are a polypropylene composition for an oriented film having high thermal resistance and rigidity, and an oriented film containing same. The polypropylene composition for an oriented film contains a polypropylene selected from the group consisting of a propylene homopolymer and a propylene-ethylene copolymer containing units derived from 1.0 wt % or less of ethylene, wherein the polypropylene satisfies the following requirement (1). (1) The molecular weight distribution Mw/Mn as determined by GPC and the amount γ (wt%) of components having a molecular weight of 1,000,000 or more as determined by GPC satisfy 0.4 < (Mw/Mn) · γ < 10.

## Description

### Technical Field

The present invention relates to a polypropylene composition for an oriented film and an oriented film containing the same.

### Background Art

Oriented films made of polypropylene resins are universally used in a wide range of applications such as electrical insulation, surface protection, and packaging of various products such as foods and industrial components. However, it has been pointed out that conventional oriented films made of polypropylene resins have low heat resistance. Oriented films made of polypropylene resins are significantly inferior in heat resistance to other materials, especially polyethylene terephthalate films and the like, and the heat shrinkage rate at 150°C is as high as several tens of percent. In addition, since the rigidity of oriented films made of polypropylene resins is low, the materials used vary according to the application.

Various technologies for improving physical properties such as heat resistance and mechanical properties of biaxially oriented polypropylene films have been proposed. For example, claim 1 of Patent Literature 1 discloses "a propylene polymer having decaline solubles not more than 1.6 wt% and a polydispersity index (PI) of at least 5.0" as a propylene polymer having a very advantageous rigidity-processability balance especially for film applications including biaxially oriented polypropylene film applications.

Claim 1 of Patent Literature 2 discloses as a biaxially stretched laminated polypropylene film having high heat resistance and rigidity, "a biaxially oriented stretched polypropylene film characterized in that a polypropylene resin constituting the film, which comprises a complete homopolypropylene resin containing no copolymerization component and/or a polypropylene resin copolymerized with ethylene and/or an α-olefin having 4 or more carbon atoms, satisfies the conditions 1) to 4) below, that the lower limit of the planar orientation factor of the film is 0.0125, and that the tensile modulus in the transverse direction of the film is 5.1 GPa or more.
1) The lower limit of the mesopentad fraction is 96%.
2) The upper limit of an amount of comonomer other than propylene is 0.1 mol%.
3) The mass average molecular weight (Mw) / number average molecular weight (Mn) is 3.0 or more and 5.4 or less.
4) The melt flow rate (MFR) measured at 230°C and 2.16 kgf is 6.5 g/10 min or more and 9.0 g/10 min or less."

### Citation List

### Patent Literature

Patent Literature 1: JP 2008-540815 A
Patent Literature 2: JP 2023-17015 A

### Summary of Invention

### Technical Problem

The oriented films obtained from the polypropylene resins of Patent Literatures 1 and 2 do not have sufficient heat resistance, and for example, under high-temperature conditions exceeding 150°C, they have problems that they cannot maintain their shape, that printed characters, patterns, and the like on them are easily deformed and that they wrinkle easily. In addition, in Patent Literatures 1 and 2, the structure, properties, etc. of a preferred polypropylene or polypropylene composition for improving heat resistance have not been sufficiently studied. An object of the present invention is to provide a polypropylene composition which gives an oriented film having high heat resistance and rigidity, and an oriented film containing the same.

### Solution to Problem

As a result of extensive studies, the present inventors have found that an oriented film having excellent heat resistance and rigidity can be obtained by setting the relationship between a molecular weight distribution Mw/Mn and a content of high molecular weight components of polypropylene within a predetermined range, and have thus completed the present invention. The present invention relates to the following [1] to [8].
[1] A polypropylene composition for an oriented film comprising a polypropylene selected from the group consisting of a propylene homopolymer and a propylene-ethylene copolymer containing units derived from ethylene in an amount of 1.0% by weight or less, wherein the polypropylene satisfies the following requirement (1).
   (1) A molecular weight distribution Mw/Mn as determined by GPC measurement and an amount γ (% by weight) of components having a molecular weight of 1 million or more as determined by GPC measurement satisfy 0.4 < (Mw/Mn) · γ < 10.
[2] The polypropylene composition for an oriented film according to [1], wherein the polypropylene satisfies the following requirement (2).
   (2) A melt flow rate measured in accordance with JIS K7210 at 230°C and under a load of 2.16 kg is 3.5 to 20 g/10 minutes.
[3] The polypropylene composition for an oriented film according to [1] or [2], wherein the polypropylene satisfies the following requirement (3).
   (3) An isotactic mesopentad fraction (mmmm) measured by ¹³C-NMR is 95% or more.
[4] The polypropylene composition for an oriented film according to any one of [1] to [3], wherein the polypropylene satisfies the following requirement (4).
   (4) The Mw/Mn satisfies 2.0 < Mw/Mn < 5.0.
[5] The polypropylene composition for an oriented film according to any one of [1] to [4], wherein the polypropylene satisfies the following requirement (5).
   (5) The γ is less than 5.0% by weight.
[6] An oriented film comprising the polypropylene composition for an oriented film according to any one of [1] to [5].
[7] The oriented film according to [6], wherein a heat shrinkage rate of the oriented film, measured in accordance with JIS K6782 at 150°C for 30 minutes, is 0 to 3.5% in the MD direction and 0 to 5.0% in the TD direction.
[8] The oriented film according to [6] or [7], wherein a Young's modulus of the oriented film, measured in accordance with JIS K7127, is 5.6 GPa or more in the TD direction.

### Advantageous Effects of Invention

The polypropylene compositions for an oriented film according to the embodiments 1 to 5 exhibit high heat resistance and rigidity. Since the oriented films according to the embodiments 6 to 8 have high heat resistance and rigidity, and can maintain their shape even at high temperatures, they do not wrinkle easily, and characters, patterns and the like of the printed matter are not deformed.

### Brief Description of Drawings

[Fig. 1] Fig. 1 is a diagram for explaining a baseline and an interval of a chromatogram in GPC measurement.
[Fig. 2] Fig. 2 is a diagram showing an example of a molecular weight distribution curve and an integral molecular weight distribution curve.

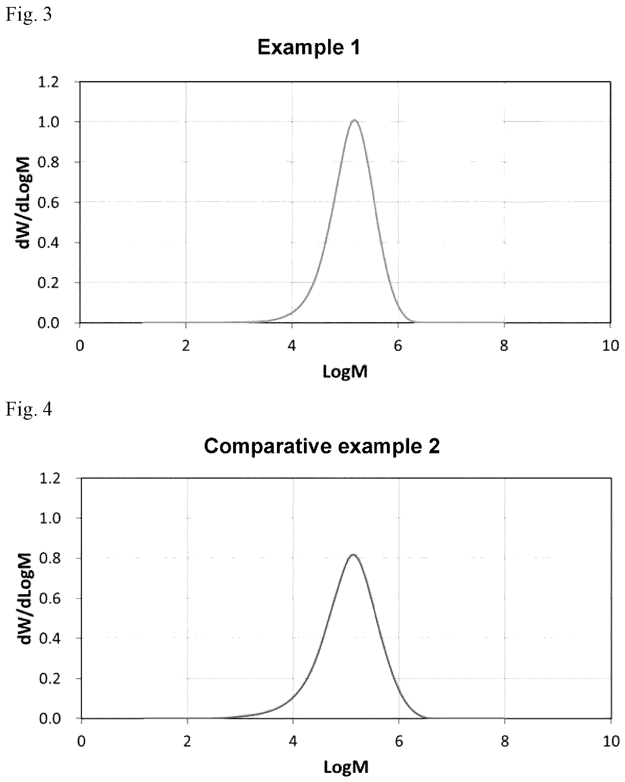

[Fig. 3] Fig. 3 is a diagram showing a molecular weight distribution curve of a polypropylene of Example 1.
[Fig. 4] Fig. 4 is a diagram showing a molecular weight distribution curve of a propylene polymer of Comparative Example 2.

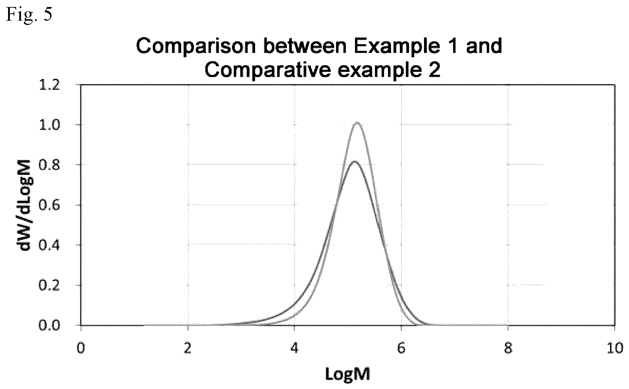

[Fig. 5] Fig. 5 is a diagram comparing Figs. 3 and 4.

### Description of Embodiments

The polypropylene composition for an oriented film of the present invention comprises a polypropylene selected from the group consisting of a propylene homopolymer and a propylene-ethylene copolymer containing units derived from ethylene in an amount of 1.0% by weight or less, wherein the polypropylene satisfies the following requirement (1).
(1) A molecular weight distribution Mw/Mn as determined by GPC measurement and an amount γ (% by weight) of components having a molecular weight of 1 million or more as determined by GPC measurement satisfy 0.4 < (Mw/Mn) · γ < 10.

By using the polypropylene composition for an oriented film, an oriented film having high heat resistance and rigidity can be obtained.

In the present invention, a propylene polymer means a propylene homopolymer or a propylene-ethylene copolymer containing units derived from ethylene in an amount of 1.0% by weight or less. In the present invention, a polypropylene means a polymer satisfying the above requirement (1) among the propylene polymers.

### [Polypropylene Composition]

The polypropylene composition comprises a polypropylene selected from the group consisting of a propylene homopolymer and a propylene-ethylene copolymer containing units derived from ethylene in an amount of 1.0% by weight or less. In the present invention, the content ratio of units derived from ethylene in the propylene-ethylene copolymer is a value calculated based on the following equation: 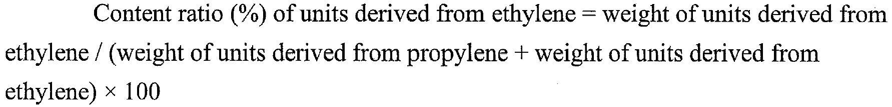 Content ratio (%) of units derived from ethylene = weight of units derived from ethylene / (weight of units derived from propylene + weight of units derived from ethylene) × 100

The propylene homopolymer and the propylene-ethylene copolymer may each be used alone, or in combination of two or more thereof.

The polypropylene composition may contain only either one of the propylene homopolymer and the propylene-ethylene copolymer, contain both the propylene homopolymer and the propylene-ethylene copolymer, or contain the propylene homopolymer and/or the propylene-ethylene copolymer as a main component and the other component as a subcomponent.

In the present invention, "containing as a main component" means that the total content of the propylene homopolymer and the propylene-ethylene copolymer in 100% by weight of the polypropylene composition is 50% by weight or more. From the view of suppressing appearance defects caused by a subcomponent or maintaining film physical properties of heat resistance and rigidity, the total content of the propylene homopolymer and the propylene-ethylene copolymer in 100% by weight of the polypropylene composition is preferably 80% by weight or more, and more preferably 90% by weight or more. The upper limit of the total content of the propylene homopolymer and the propylene-ethylene copolymer is 100% by weight.

### <Polypropylene>

From the view of heat resistance and rigidity of the oriented film, the polypropylene is preferably a propylene homopolymer. When the polypropylene is a propylene-ethylene copolymer, the content of units derived from ethylene is 1.0% by weight or less, preferably 0.5% by weight or less, and more preferably 0.3% by weight or less. In the above range, high rigidity of the oriented film can be maintained.

The polypropylene may be obtained by polymerizing other monomers such as an α-olefin having 4 or more carbon atoms and a non-conjugated diene, as long as the object of the present invention is not impaired.

The polypropylene satisfies the following requirement (1).
(1) A molecular weight distribution Mw/Mn as determined by GPC measurement and an amount y (% by weight) of components having a molecular weight of 1 million or more as determined by GPC measurement satisfy 0.4 < (Mw/Mn) · γ < 10.

By satisfying 0.4 < (Mw/Mn) · γ < 10, an oriented film having high rigidity and low heat shrinkage can be obtained. From the view of obtaining an oriented film having high rigidity and low heat shrinkage, it is preferably (Mw/Mn) · γ < 7, more preferably (Mw/Mn) · y < 5, and further preferably (Mw/Mn) · γ < 4.

From the view of moldability such as breakage and uneven elongation during film forming, it is (Mw/Mn) · γ > 0.4, preferably (Mw/Mn) · y > 0.6, and more preferably (Mw/Mn) · γ ≥ 1.0.

The values of Mn, Mw and y defined above are obtained by gel permeation chromatography (GPC). Details of the measuring method and measuring instrument are as described in Examples.

Here, Mn and Mw are a number average molecular weight and a weight average molecular weight of the polypropylene by GPC measurement, and Mw/Mn can be an index of a molecular weight distribution of the polypropylene. The Mn, Mw and Mw/Mn of polypropylene can be easily adjusted by changing temperature and pressure conditions of propylene polymerization, or by adding a chain transfer agent such as hydrogen at the time of propylene polymerization, as the most general method. Furthermore, the Mn, Mw and Mw/Mn can be controlled by changing the kind of metallocene complex to be used, and by changing an amount ratio of the complexes when two or more kinds of complexes are used. The Mn, Mw and Mw/Mn can also be adjusted by appropriately subjecting a propylene polymer having a higher molecular weight to controlled degradation.

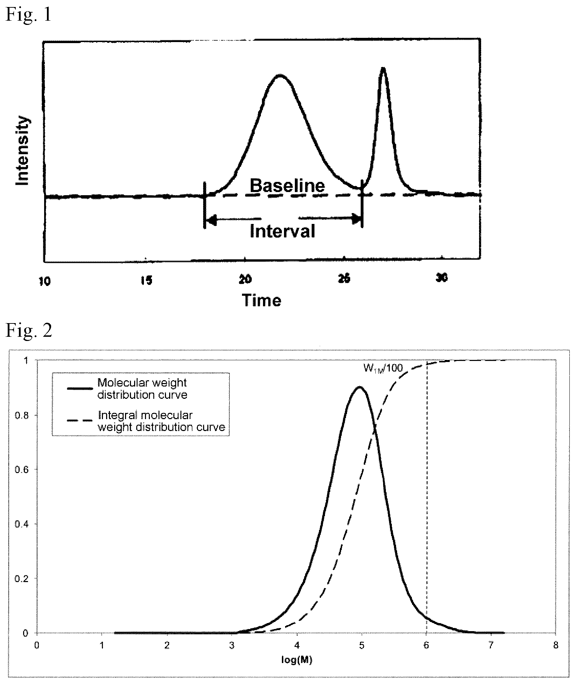

y is an amount (unit: % by weight) of components having a molecular weight of 1 million or more in 100% by weight of the polypropylene as determined by GPC measurement. Specifically, the γ is a value obtained by multiplying 100 by a value obtained by subtracting from 1 an integral value of a molecular weight (M) up to 1 million (Log (M) = 6.0) in an integral molecular weight distribution curve (the total amount is normalized to 1) obtained by GPC measurement. An example of how the γ is determined is shown in Fig. 2. The y can be adjusted, for example, by polymerization under the control of prepolymerization conditions, an amount of hydrogen at the time of polymerization, etc., in addition to the selection or combination of catalysts and the amount ratio thereof. The γ can also be adjusted by appropriately subjecting a propylene polymer having a higher molecular weight to controlled degradation.

0.4 < (Mw/Mn) · y < 10 can be achieved by narrowing the molecular weight distribution of the polypropylene and reducing the amount of high molecular weight components having a molecular weight of 1 million or more. When 0.4 < (Mw/Mn) · y is satisfied, film forming suitability in a biaxial stretching machine is improved, so that trouble at the time of film production can be prevented, and quality such as film thickness accuracy is improved. When (Mw/Mn) · γ < 10 is satisfied, it is considered that a large viscosity due to the fraction of polymer molecules having a molecular weight of 1 million or more is suppressed, that the presence of a large amount of molecules having similar molecular weight makes it possible to suppress the heat shrinkage due to entropy, and that the obtained oriented film exhibits low heat shrinkage.

The polypropylene preferably satisfies the following requirements (2) to (5).

(2) A melt flow rate measured in accordance with JIS K7210 at 230°C and under a load of 2.16 kg is 3.5 to 20 g/10 minutes.

A melt flow rate (MFR) measured in accordance with JIS K7210:1999 at 230°C and under a load of 2.16 kg of the polypropylene is preferably 3.5 to 20 g/10 minutes, more preferably 5.0 to 18 g/10 minutes, and further preferably 7.0 to 15 g/10 minutes. In the above range, the moldability in molding a film is good.

The melt flow rate (MFR) of the polypropylene can be easily adjusted by changing the temperature and pressure of polymerization or by adding a chain transfer agent such as hydrogen at the time of polymerization as a general method. The melt flow rate (MFR) can also be adjusted by appropriately subjecting a propylene polymer having a higher molecular weight to controlled degradation.

(3) An isotactic mesopentad fraction (mmmm) measured by ¹³C-NMR is 95% or more.

An isotactic mesopentad fraction (mmmm) measured by ¹³C-NMR of the polypropylene is preferably 95% or more, more preferably 96% or more, and further preferably 97% or more. The mmmm may be 95 to 96%. In the above range, the film has good rigidity.

In this specification, the isotactic mesopentad fraction (mmmm) is a value measured by the following method.

### (¹³C-NMR Measurement Method)

### [Sample Preparation and Measurement Conditions]

200 mg of a sample is placed in an NMR sample tube having an inner diameter of 10 mmφ together with 2.4 mL of o-dichlorobenzene/deuterated bromobenzene (C₆D₅Br) = 4/1 (volume ratio) and hexamethyldisiloxane as a chemical shift standard substance, and dissolved uniformly by a block heater at 150°C.

NMR measurement is conducted using an NMR apparatus Model AV400 manufactured by Bruker Biospin, having a 10mmφ CryoProbe attached.

The ¹³C-NMR measurement conditions are a sample temperature of 120°C, a pulse angle of 90°, a pulse interval of 15 seconds, and an accumulation number of 1024. The measurement is conducted with a broadband decoupling method.

With respect to the chemical shift, a ¹³C signal of hexamethyldisiloxane is set at 1.98 ppm, and chemical shifts of other ¹³C signals are based on this.

### [Calculation Method of Isotactic Mesopentad Fraction (mmmm)]

The isotactic mesopentad fraction (mmmm) of 5 chains of propylene units can be calculated by substituting integrated intensities of the ¹³C signals measured by the ¹³C-NMR measurement into the following Equation (1): $mmmm \left(%\right) = \left({I}_{mm}-2\times {I}_{mrrm}\right) \times 100 / \left({I}_{mm}+3\times {I}_{mrrm}\right)$ Equation (1) where Iₘₘ represents an integrated intensity of a ¹³C signal assigned to a binding mode of mm for 3 chains of propylene units, and is calculated as an integrated intensity of a ¹³C signal in a chemical shift range of 23.6 to 21.1 ppm (hereinafter, described as "I_{23.6∼21.1}").

Iₘᵣᵣₘ represents an integrated intensity of a ¹³C signal assigned to a binding mode of mrrm for 5 chains of propylene units, and is a value indicated by I_{19.9∼19.7}.

Spectral assignments can be made with reference to Polymer Journal, vol. 16, page 717 (1984), Asakura Publishing Co., Ltd., Macromolecules, vol. 8, page 687 (1975), and Polymer, vol. 30, page 1350 (1989).

The chemical shift range is slightly shifted depending on the molecular weight of the polymer, etc., but the region can be easily identified.

### (4) The Mw/Mn satisfies 2.0 < Mw/Mn < 5.0.

For the polypropylene, the Mw/Mn by GPC measurement is preferably 2.0 < Mw/Mn < 5.0, more preferably 2.3 ≤ Mw/Mn ≤ 4.8, and further preferably 2.6 ≤ Mw/Mn ≤ 4.7. The Mw/Mn is an index representing a molecular weight distribution, and it means that the smaller the value, the narrower the molecular weight distribution. By making the Mw/Mn small and appropriate, the film can be stretched uniformly and stably. When the Mw/Mn is < 5.0, the uniformity of the molecular chain length becomes high, and an external force applied by stretching is sufficiently transmitted to the material, so that the rigidity of the molded article is easily improved. When the Mw/Mn is > 2.0, the moldability is improved, and therefore the thickness accuracy and the surface property at the time of film production are easily improved.

### (5) The y is less than 5.0 % by weight.

For the polypropylene, the amount γ of components having a molecular weight of 1 million or more by GPC measurement is preferably less than 5.0% by weight, more preferably less than 3.0% by weight, further preferably less than 2.0% by weight, and particularly preferably less than 1.5% by weight. The γ is preferably 0.01% by weight or more, more preferably 0.05% by weight or more, further preferably more than 0.1% by weight, and particularly preferably 0.4% by weight or more. In the above range, the stretching tension of the polypropylene is small, and the load of the apparatus during molding can be suppressed. Furthermore, when the molecular chains are oriented or the crystal structure such as lamellae is rearranged during stretching, the film can be molded uniformly and stably, the rigidity of the film can be easily improved, and the higher order structure prevents the film from shrinking when heated.

### <Method for Producing Polypropylene>

The propylene polymer can be preferably obtained by polymerizing propylene or copolymerizing propylene with a small amount of ethylene using a catalyst such as a Ziegler-Natta catalyst or a metallocene catalyst. When the propylene polymer thus obtained satisfies the above requirement (1), the propylene polymer can be used as the polypropylene of the present invention.

An example of the Ziegler-Natta catalysts includes a solid component (a) containing magnesium, titanium, halogen, and an internal electron donor compound selected from phthalate compounds, diether compounds, succinate compounds, and the like. In addition to the solid component (a), the Ziegler-Natta catalysts may optionally contain an organoaluminum compound (b) and an external electron donor compound (c). Further, the solid component (a) may be subjected to a contact treatment with an alkoxysilane or a silane compound having an alkenyl group.

Examples of the metallocene catalysts include a metallocene catalyst comprising a metallocene compound, at least one or more compounds selected from organometallic compounds, organoaluminum oxy compounds and compounds capable of forming an ion pair by reacting with the metallocene compound, and, if necessary, a particulate carrier. Among them, a metallocene catalyst capable of stereoregular polymerization such as an isotactic or syndiotactic structure is preferable.

As the polymerization method of the propylene polymer, a known method may be adopted, for example, including a method of polymerization in an inert solvent such as hexane, heptane, toluene or xylene; a method of polymerization in a liquid monomer; a method of polymerization in a gas phase by adding a catalyst to a gaseous monomer; or a method of polymerization by combining these methods.

The polymerization of the propylene polymer may be a single-stage polymerization carried out in a single reactor or a multi-stage polymerization carried out in a plurality of reactors, and in the case of the multi-stage polymerization, the polymerization conditions in each of the reactors may be the same or different. The reactors may have gradients of monomer concentration and polymerization conditions.

The molecular weight of the propylene polymer may be adjusted by using a chain transfer agent such as hydrogen.

When the obtained propylene polymer has (Mw/Mn) · γ ≥ 10, the propylene polymer may be subjected to controlled degradation treatment with an organic peroxide to adjust the Mw/Mn and y so as to satisfy 0.4 < (Mw/Mn) · γ < 10. In particular, the controlled degradation treatment causes molecular scission of components (molecules) constituting the propylene polymer and having a relatively high molecular weight, so that the γ becomes small and it can satisfy 0.4 < (Mw/Mn) · γ < 10.

When the obtained propylene polymer satisfies 0.4 < (Mw/Mn) · γ < 10, the controlled degradation treatment with an organic peroxide is not essential, but the controlled degradation treatment may be carried out in order to set the value of (Mw/Mn) γ in a more preferable range-and further improve the high rigidity and low heat shrinkage of the oriented film.

When the propylene polymer satisfies (Mw/Mn) γ ≤ 0.4, the propylene polymer can be adjusted to satisfy 0.4 < (Mw/Mn) · γ < 10 as a whole by mixing with a separately propylene polymer having a large Mw/Mn or γ and satisfying (Mw/Mn) · γ ≥ 10.

As long as the propylene polymer before the controlled degradation treatment is a propylene homopolymer or a propylene-ethylene copolymer containing units derived from ethylene in an amount of 1.0% by weight or less, there is no particular restriction, but Mw/Mn is preferably 5 to 20, and more preferably 6 to 15. A melt flow rate (MFR) measured in accordance with JIS K7210:1999 at 230°C and under a load of 2.16 kg is preferably 0.1 to 10 g/10 minutes, and more preferably 0.2 to 5 g/10 minutes.

Examples of organic peroxides include benzoyl peroxide, di-t-butyl peroxide, dicumyl peroxide, t-butyl cumyl peroxide, 1,1-bis-(t-butylperoxy)-3,3,5-trimethylcyclohexane, 1,1-bis(t-butylperoxy)cyclohexane, 2,2-bis(t-butylperoxy) octane, n-butyl-4,4-bis(t-butylperoxy)valerate, 2,5-dimethyl-2,5-di(t-butylperoxy)hexane, 2,5-dimethyl-2,5-di(benzoylperoxy)hexane, 2,5-dimethyl-2,5-di(t-butylperoxy)-3-hexyne, 1,3-bis(t-butylperoxyisopropyl)benzene, α,α'-bis(t-butylperoxyisopropyl)benzene, t-butyl-hydroperoxide, cumene hydroperoxide, lauroyl peroxide, di-t-butyl-di-peroxyphthalate, t-butyl peroxymaleic acid, t-butyl peroxyisopropyl carbonate, and isopropyl percarbonate.

These are not limited to one kind but two or more kinds can be used in combination. Among these, 2,5-dimethyl-2,5-di(t-butylperoxy)hexane, 2,5-dimethyl-2,5-di(t-butylperoxy)-3-hexyne, 1,3-bis(t-butylperoxyisopropyl)benzene or α,α'-bis(t-butylperoxyisopropyl)benzene is preferable.

The controlled degradation treatment may be carried out by using 0.005 to 1.0 parts by weight of the organic peroxide based on 100 parts by weight of the propylene polymer and kneading the two by heating at a temperature equal to or higher than a melting temperature of the polymer, for example, 180 to 300°C. The method may be a known method, and it is particularly preferable to perform the treatment in an extruder. In order to disperse the organic peroxide uniformly in the propylene polymer, the two may be mixed by using a mixing machine such as a Henschel mixer or a ribbon blender, before heating and kneading. Further, in order to improve the dispersibility of the organic peroxide, a mixture of the organic peroxide in a suitable medium may also be used.

The polypropylene thus obtained may be formed into pellets, powders or the like by a known method.

### < Polypropylene Composition >

The polypropylene composition may comprise the polypropylene alone or may comprise the polypropylene and other components.

Examples of the other components include additives and other polymers other than the polypropylene. Examples of the additives include an antioxidant, a lubricant, an antistatic agent, an anti-blocking agent, an ultraviolet absorber, a light stabilizer, a chlorine absorber, a heat stabilizer, an antifogging agent, a flame retardant, a dispersant, a copper damage inhibitor, a neutralizing agent, a plasticizer, an air bubble inhibitor, a crosslinking agent, a peroxide, an oil spreading agent, and a pigment.

Examples of the antioxidants include a phenolic antioxidant and a phosphite antioxidant. Examples of the phenolic antioxidants include 2,6-di-t-butyl-p-cresol (BHT), tetrakis[methylene-3-(3,5-di-t-butyl-4-hydroxyphenyl)propionate]methane (manufactured by BASF Japan Ltd., trade name "IRGANOX (registered trademark) 1010"), and n-octadecyl-3-(4'-hydroxy-3',5'-di-t-butylphenyl)propionate (manufactured by BASF Japan Ltd., trade name "IRGANOX (registered trademark) 1076"). Examples of the phosphite antioxidants include bis(2,4-di-t-butylphenyl)pentaerythritol diphosphite and tris(2,4-di-t-butylphenyl)phosphite.

Examples of the lubricants include a higher fatty acid amide and a higher fatty acid ester.

Examples of the antistatic agents include a glycerol ester of a fatty acid having 8 to 22 carbon atoms, a sorbitan acid ester, and a polyethylene glycol ester.

Examples of the anti-blocking agents include silica, calcium carbonate, and talc.

Examples of the ultraviolet absorbers include a triazole compound, a benzophenone compound, a salicylate compound, a cyanoacrylate compound, a nickel chelate compound, and an inorganic particulate-based compound.

Examples of the triazole-based ultraviolet absorbers include 2-(2'-hydroxy-5'-methylphenyl)benzotriazole (manufactured by Sumitomo Chemical Co., Ltd., trade name: Sumisorb (registered trademark) 200; manufactured by BASF Japan Ltd., trade name: Tinuvin (registered trademark) P), 2-(2'-hydroxy-5'-t-octylphenyl)benzotriazole (manufactured by Sumitomo Chemical Co., Ltd., trade name: Sumisorb (registered trademark) 340; manufactured by BASF Japan Ltd., trade name: Tinuvin (registered trademark) 399), 2-(2'-hydroxy-3',5'-di-t-butylphenyl)benzotriazole (manufactured by Sumitomo Chemical Co., Ltd., trade name: Sumisorb (registered trademark) 320; manufactured by BASF Japan Ltd., trade name: Tinuvin (registered trademark) 320), 2-(2'-hydroxy-3',5'-di-t-amylphenyl)benzotriazole (manufactured by Sumitomo Chemical Co., Ltd., trade name: Sumisorb (registered trademark) 350; manufactured by BASF Japan Ltd., trade name: Tinuvin (registered trademark) 328), and 2-(2'-hydroxy-3'-t-butyl-5'-methylphenyl)-5-chlorobenzotriazole (manufactured by Sumitomo Chemical Co., Ltd., trade name: Sumisorb (registered trademark) 300; manufactured by BASF Japan Ltd., trade name: Tinuvin (registered trademark) 326).

Examples of the benzophenone-based ultraviolet absorbers include 2-hydroxy-4-methoxybenzophenone (manufactured by Sumitomo Chemical Co., Ltd., trade name: Sumisorb (registered trademark) 110), and 2-hydroxy-4-n-octoxybenzophenone (manufactured by Sumitomo Chemical Co., Ltd., trade name: Sumisorb (registered trademark) 130).

Examples of the salicylate-based ultraviolet absorbers include 4-t-butylphenyl salicylate (manufactured by SHIPRO KASEI KAISHA, LTD., trade name: SEESORB 202).

Examples of the cyanoacrylate-based ultraviolet absorbers include ethyl (3,3-diphenyl)cyanoacrylate (manufactured by SHIPRO KASEI KAISHA, LTD., trade name: SEESORB 501).

Examples of the nickel chelate-based ultraviolet absorbers include nickel dibutyldithiocarbamate (manufactured by Sumitomo Chemical Co., Ltd., trade name: Antigen (registered trademark) NBC).

Examples of the inorganic particulate-based ultraviolet absorbers include TiO₂, ZnO₂, and CeO₂.

Examples of the light stabilizers include compounds such as a sebacate type, butane tetracarboxylate type, succinic acid polyester type, and triazine type.

Examples of the sebacate type light stabilizers include bis(2,2,6,6-tetramethyl-4-piperidyl) sebacate (manufactured by ADEKA CORPORATION, trade name: ADK STAB (registered trademark) LA-77; manufactured by BASF Japan Ltd., trade name: Tinuvin (registered trademark) 770), and bis(1,2,2,6,6-pentamethyl-4-piperidyl) sebacate (manufactured by BASF Japan Ltd., trade name: Tinuvin (registered trademark) 765).

Examples of the butane tetracarboxylate type light stabilizers include tetrakis(2,2,6,6-tetramethyl-4-piperidyl)-1,2,3,4-butanetetracarboxylate (manufactured by ADEKA CORPORATION, trade name: ADK STAB (registered trademark) LA-57), tetrakis(1,2,2,6,6-pentamethyl-4-piperidyl)-1,2,3,4-butanetetracarboxylate (manufactured by ADEKA CORPORATION, trade name: ADK STAB (registered trademark) LA-52), a condensate of 1,2,3,4-butanetetracarboxylic acid with 2,2,6,6-tetramethyl-4-piperidinol and tridecyl alcohol (manufactured by ADEKA CORPORATION, trade name: ADK STAB (registered trademark) LA-67), and a condensate of 1,2,3,4-butanetetracarboxylic acid with 1,2,2,6,6-pentamethyl-4-piperidinol and tridecyl alcohol (manufactured by ADEKA CORPORATION, trade name: ADK STAB (registered trademark) LA-62).

Examples of the succinic acid polyester type light stabilizers include a condensation polymer of succinic acid with 1-(2-hydroxyethyl)-4-hydroxy-2,2,6,6-tetramethylpiperidine.

Examples of the triazine type light stabilizers include a condensate of N,N'-bis(3-aminopropyl)ethylenediamine with 2,4-bis {N-butyl-N-(1,2,2,6,6-pentamethyl-4-piperidyl)amino}-6-chloro-1,3,5-triazine (manufactured by BASF Japan Ltd., trade name: Chimasorb (registered trademark) 199), poly{6-(1,1,3,3-tetramethylbutyl)amino-1,3,5-triazine-2,4-diyl} {(2,2,6,6-tetramethyl-4-piperidyl)imino}hexamethylene {(2,2,6,6-tetramethyl-4-piperidyl)imino} (manufactured by BASF Japan Ltd., trade name: Chimasorb (registered trademark) 944), and poly(6-morpholino-s-triazine-2,4-diyl) {(2,2,6,6-tetramethyl-4-piperidyl)imino} hexamethylene {(2,2,6,6-tetramethyl-4-piperidyl)imino} (manufactured by BASF Japan Ltd., trade name: Chimasorb (registered trademark) 3346).

Examples of the other polymers include polypropylene-based resins other than the polypropylene of the present invention, polyethylene, and propylene-based or ethylene-based elastomers.

Examples of the propylene-based or ethylene-based elastomers include ethylene-α-olefin copolymers, binary random copolymers of propylene and an α-olefin having 4 to 12 carbon atoms, and ternary random copolymers of propylene, ethylene and an α-olefin having 4 to 12 carbon atoms.

The content of the additives in 100% by weight of the polypropylene composition is preferably 5% by weight or less, more preferably 3% by weight or less, and further preferably 1% by weight or less. The content of the other polymers in 100% by weight of the polypropylene composition is preferably 49% by weight or less, more preferably 20% by weight or less, and further preferably 10% by weight or less.

When the polypropylene composition contains an additive or other polymer, the polypropylene composition can be produced by mixing or melt-kneading the polypropylene with the additive or other polymer. Examples of the mixing method include a method of mixing by a Henschel mixer, a V-blender, a ribbon blender, a tumbler blender, or the like.

Examples of the melt-kneading method include a method of melt-kneading by a kneading machine such as a single-screw extruder, a multi-screw extruder, a kneader, a Banbury mixer, or the like. The polypropylene composition thus obtained can be formed into pellets, powders, or the like by a known method.

The additive may be added at the time of polymerization of the propylene polymer, may be added simultaneously or separately with the organic peroxide at the time of controlled degradation treatment of the propylene polymer, or may be added to the polypropylene after controlled degradation treatment. The other polymer is usually added to the polypropylene after controlled degradation treatment. The mixing method is not particularly limited as long as the effects of the present invention are not impaired in any of them.

### [Oriented Film]

The oriented film contains the polypropylene composition. The content of the polypropylene composition in 100% by weight of the oriented film is preferably 50% by weight or more, and more preferably 80% by weight or more. The upper limit of the content of the polypropylene composition in 100% by weight of the oriented film is 100% by weight.

The oriented film can be produced by preparing an unoriented film of the polypropylene composition using a known melt extrusion film forming method and then stretching the obtained film. The oriented film may be an uniaxially oriented film or a biaxially oriented film, and is preferably a biaxially oriented film from the view of the composite balance in the MD direction and the TD direction. In the case of the biaxially oriented film, either of simultaneous biaxial stretching or sequential biaxial stretching may be employed.

A heat shrinkage rate of the oriented film measured in accordance with JIS K6782 at 150°C for 30 minutes is preferably 0 to 3.5% in the MD direction, and more preferably 0 to 3.0%. The heat shrinkage rate is preferably 0 to 5.0% in the TD direction, more preferably 0 to 3.0%, and further preferably 0 to 1.5%. Above all, the heat shrinkage rate is preferably 0 to 3.5% in the MD direction and 0 to 5.0% in the TD direction, more preferably 0 to 3.0% in the MD direction and 0 to 3.0% in the TD direction, and further preferably 0 to 3.0% in the MD direction and 0 to 1.5% in the TD direction. In the above range, it is possible to use the oriented film for applications requiring high heat resistance in which conventional OPP films cannot be used, and there is an advantage that it can be used in place of PET films, for example.

A Young's modulus of the oriented film measured in accordance with JIS K7127 is preferably 2 GPa or more in the MD direction, more preferably 2.2 GPa or more, and further preferably 2.5 GPa or more. A Young's modulus of the oriented film measured in accordance with JIS K7127 is preferably 5.6 GPa or more in the TD direction, more preferably 6.0 GPa or more, and further preferably 6.5 GPa or more.
In the above range, it is possible to use the oriented film for applications requiring high heat resistance in which conventional OPP films cannot be used, and there is an advantage that it can be used in place of PET films, for example.

In the present invention, the MD direction is a flow direction (also referred to as a length direction or a longitudinal direction) of a film, and the TD direction is a direction perpendicular to the flow direction and a thickness direction of the film (also referred to as a lateral direction or a width direction).

The oriented film may be a monolayer film containing the polypropylene composition or a multilayer film in which each layer contains the polypropylene composition. In the case of the multilayer film, the polypropylene compositions constituting each layer may be the same or different. In addition, the oriented film may be a laminated film further laminated with the other layer(s).

In the case of the multilayer film or the laminated film, a monolayer film containing the polypropylene composition may be subjected to a stretching treatment and then the multilayer film or the laminated film may be formed, or a multilayer film or a laminated film may be formed and then subjected to a stretching treatment.

When the oriented film is a monolayer film, its thickness is preferably 5 to 200 µm, more preferably 10 to 150 µm, further preferably 12 to 100 µm, and even more preferably 15 to 80 µm.

When the oriented film is incorporated into a multilayer film each containing the polypropylene composition or a laminated film in which the oriented film and the other layer(s) are laminated, the thickness of each oriented film is preferably 5 to 150 µm, more preferably 10 to 100 µm, further preferably 12 to 80 µm, and even more preferably 15 to 60 µm.

In the case of the multilayer film or the laminated film, the total thickness is preferably 5 to 200 µm, more preferably 10 to 150 µm, further preferably 12 to 120 µm, and even more preferably 15 to 100 µm.

The method for producing the oriented film is not particularly limited. For example, an unoriented film comprising the polypropylene composition may be prepared and stretched uniaxially or biaxially by a known method to obtain the oriented film. The molding temperature for stretching the unoriented film is preferably 140 to 180°C, more preferably 150 to 175°C, and further preferably 155 to 170°C. The method may include an MD stretching step, in which an unoriented film is stretched 2 to 10 times, preferably 4 to 7 times, in the MD direction by using a stretching roll to obtain an uniaxially oriented film. The method may include a TD stretching step, in which a biaxially oriented film is obtained by stretching the uniaxially oriented film obtained in the MD stretching step to 4 to 20 times, preferably 4 to 10 times, in the TD direction in a heating furnace using 2 rows of chucks aligned along the MD direction.

In order to improve processability, the surface of the oriented film may be subjected to discharge treatment such as corona or plasma, flame treatment, ozone treatment or the like.

The oriented film may be used as one layer of a multilayer film or a laminated film. The laminated film is obtained by laminating an optional layer on one or both sides of a layer composed of the oriented film. Examples of a method for producing the multilayer film or the laminated film include a co-extrusion method, an extrusion lamination method, a thermal lamination method, a dry lamination method, an inflation method for cooling in water or an atmospheric atmosphere, which are commonly used.

For example, a laminated film may be constituted by laminating an optional layer such as a sealant layer, a gas barrier layer, an adhesive layer or a printing layer on the oriented film. Among them, it is preferable to laminate a sealant layer comprising an olefin resin on a layer composed of the oriented film, and the obtained laminated film has an effect of being easy to recycle.

The oriented film can be used as various packaging materials. For example, the packaging material formed of the laminated film described above can be suitably used for packaging any object to be packaged such as foods, clothing, miscellaneous goods and the like.

### Examples

Hereinafter, the present invention will be described in more detail by way of Examples, but the present invention is not limited to only Examples. Hereinafter, propylene polymers that satisfy 0.4 < (Mw/Mn) · γ < 10 will be referred to as "polypropylene", and those that do not satisfy it will be referred to as "propylene polymer".

### [Method of Measuring Physical Properties]

Physical property measurements and analysis values of each item in Examples were made according to the following methods.

### (1) MFR (unit: g/10 minutes)

An MFR was measured using pellets of polypropylene or propylene polymer according to JIS K7210:1999, Annex A, Table 1, Condition M, under the following conditions.
Test temperature: 230°C, Nominal load: 2.16 kg
Die shape: diameter 2.095 mm, length 8.000 mm

### (2) GPC measurement

A number average molecular weight Mn, weight average molecular weight Mw, Mw/Mn and γ were determined by GPC measurement using pellets of polypropylene or propylene polymer. Details of the measurement instrument are as follows.
Apparatus: GPC (ALC/GPC, 150C), manufactured by Waters Corporation
Detector; MIRAN, 1A, IR detector, manufactured by The FOXBORO Company (measurement wavelength: 3.42 µm)
Column: AD806M/S (three columns), manufactured by Showa Denko K. K.
Solvent for mobile phase; o-dichlorobenzene (ODCB)
Measurement temperature; 140°C
Flow rate; 1.0 mL/minute
Injection volume: 0.2 mL

Preparation of a sample was conducted by preparing a 1 mg/mL solution using pellets of polypropylene or propylene polymer and ODCB (containing 0.5 mg/mL of dibutylhydroxytoluene (BHT)) and dissolving it at 140°C for about 1 hour.

A baseline and an interval of the obtained chromatogram were determined as shown in Fig. 1.

Conversion of a retention volume obtained by GPC measurement to a molecular weight was performed using a calibration curve preliminarily obtained from standard polystyrenes. The standard polystyrenes used are of the following grades, all of which are manufactured by Tosoh Corporation.
Grade: F380, F288, F128, F80, F40, F20, F10, F4, F1, A5000, A2500, A1000
0.2 mL of a solution obtained by dissolving each sample in ODCB (containing 0.5 mg/mL of BHT) at 0.5 mg/mL was injected to generate a calibration curve. As the calibration curve, a cubic expression obtained by approximation by the least squares method was used.

For conversion to a molecular weight, a general-purpose calibration curve was used with reference to Sadao Mori, "Size Exclusion Chromatography" (KYORITSU SHUPPAN CO., LTD.). The following values were used for the viscosity equation ([η] = K × M^{α}) used for conversion to a molecular weight.
(a) When making the calibration curve using standard polystyrenes $K = 1.38 \times {10}^{- 4} , α = 0.70$
(b) When measuring a sample of polypropylene or propylene polymer $K = 1.03 \times {10}^{- 4} , α = 0.78$

γ is a value obtained by multiplying 100 by a value obtained by subtracting from 1 an integral value of a molecular weight (M) up to 1 million (Log (M) = 6.0) in an integral molecular weight distribution curve (the total amount was normalized to 1) obtained by GPC measurement. An example of how the γ is determined is shown in Fig. 2.

### (3) Isotactic mesopentad fraction (mmmm) measured by ¹³C-NMR

An isotactic mesopentad fraction (mmmm) was determined using pellets of polypropylene or propylene polymer according to the following procedure.

### (¹³C-NMR measurement method)

### [Sample preparation and measurement conditions]

A 200 mg sample was placed in an NMR sample tube having an inner diameter of 10 mmφ together with 2.4 mL of o-dichlorobenzene/deuterated bromobenzene (C₆D₅Br) = 4/1 (volume ratio) and hexamethyldisiloxane as a chemical shift standard substance, and dissolved uniformly by a block heater at 150°C.

NMR measurements were conducted using an NMR apparatus Model AV400 manufactured by Bruker Biospin, having a 10 mmφ CryoProbe attached.

The ¹³C-NMR measurement conditions were a sample temperature of 120°C, a pulse angle of 90°, a pulse interval of 15 seconds, and an accumulation number of 1024. The measurement was conducted with a broadband decoupling method.

With respect to the chemical shift, a ¹³C signal of hexamethyldisiloxane was set at 1.98 ppm, and chemical shifts of other ¹³C signals were based on this.

### [Calculation method of isotactic mesopentad fraction (mmmm)]

The isotactic mesopentad fraction (mmmm) of 5 chains of propylene units was calculated by substituting integrated intensities of the ¹³C signals measured by the ¹³C-NMR measurement into the following Equation (1): $mmmm \left(%\right) = \left({I}_{mm}-2\times {I}_{mrrm}\right) \times 100 / \left({I}_{mm}+3\times {I}_{mrrm}\right)$ Equation (1) where Iₘₘ represents an integrated intensity of a ¹³C signal assigned to a binding mode of mm for 3 chains of propylene units, and is an integrated intensity of a ¹³C signal in a chemical shift range of 23.6 to 21.1 ppm. Iₘᵣᵣₘ represents an integrated intensity of a ¹³C signal assigned to a binding mode of mrrm for 5 chains of propylene units, and is an integrated intensity of a ¹³C signal in a chemical shift range of 19.9 to 19.7 ppm.

### (4) Film thickness

A thickness of biaxially oriented films of Examples 1 to 5 and Comparative Examples 1 to 5 was measured using ID-SX2 manufactured by Mitutoyo Corporation.

### (5) Glossiness (%)

A glossiness of biaxially oriented films of Examples 1 to 5 and Comparative Examples 1 to 5 was measured at an incident angle of 60° using a GLOSS meter Gloss Meter VG2000 manufactured by NIPPON DENSHOKU INDUSTRIES CO., LTD. in accordance with JIS Z8741:1997.

### (6) Haze (%)

A haze of biaxially oriented films of Examples 1 to 5 and Comparative Examples 1 to 5 was measured in accordance with JIS K7136:2000.

### (7) Young's modulus (tensile modulus) (MPa)

For biaxially oriented films of Examples 1 to 5 and Comparative Examples 1 to 5, in accordance with the method described in JIS K7127 (1999), "Plastics - Determination of tensile properties - Part 3: Test conditions for films and sheets", after conditioning for 24 hours in a 23°C and 50% RH environment, strip-shaped test specimens having a length of 150 mm and a width of 15 mm were cut out for each of the MD direction and TD direction. A Young's modulus (tensile modulus) of the films was measured in the MD direction and TD direction with a distance between chucks of 100 mm and a tensile speed of 1 mm/min in a tensile tester. It means that the larger the Young's modulus, the better the rigidity. The Young's modulus was determined according to the following criteria.

⊚: The Young's modulus in the MD direction is 2.5 GPa or more and the Young's modulus in the TD direction is 6.5 GPa or more, and the rigidity of the biaxially oriented film is extremely excellent.

∘: The Young's modulus in the MD direction is 2.2 GPa or more and the Young's modulus in the TD direction is 5.6 GPa or more and less than 6.5 GPa, and the rigidity of the biaxially oriented film is excellent.

×: The Young's modulus in the TD direction is 5.0 GPa or more and less than 5.6 GPa, and the rigidity of the biaxially oriented film is inferior.

××: The Young's modulus in the TD direction is less than 5.0 GPa, and the rigidity of the biaxially oriented film is remarkably inferior.

### (8) Heat shrinkage rate (%)

A heat shrinkage rate of biaxially oriented films of Examples 1 to 5 and Comparative Examples 1 to 5 was measured in accordance with JIS K6782 by the following method. The films were cut to a width of 20 mm and a length of 200 mm in each of the MD direction and TD direction, and the obtained test specimens were placed in a hot air oven at 150°C and heated for 30 minutes. The length immediately after heating was measured, and a ratio of the shrunk length to the original length was defined as a heat shrinkage rate. It means that the smaller the obtained value, the lower the heat shrinkage rate, and the better the heat resistance and dimensional stability during heating. The heat shrinkage rate was determined according to the following criteria.

⊚: The heat shrinkage rate in the MD direction is 0 to 3.0% and the heat shrinkage rate in the TD direction is 0 to 1.5%, and the heat shrinkage rate of the biaxially oriented film is extremely excellent.

∘: The heat shrinkage rate in the MD direction is 0 to 3.5% and the heat shrinkage rate in the TD direction is more than 1.5 to 5.0%, and the heat shrinkage rate of the biaxially oriented film is excellent.

×: The heat shrinkage rate in the MD direction is more than 3.5 to 5.0% or the heat shrinkage rate in the TD direction is more than 5.0 to 10.0%, and the heat shrinkage rate of the biaxially oriented film is inferior.

××: The heat shrinkage rate in the MD direction is more than 5.0% and the shrinkage rate in the TD direction is more than 10.0%, and the heat shrinkage rate of the biaxially oriented film is remarkably inferior.

### [Resins Used]

Various resins used in Examples and Comparative Examples are described below.

### [Polypropylene]

A-1: 0.048 parts by weight of 2,5-dimethyl-2,5-di(t-butylperoxy)hexane, which is an organic peroxide, was added to 100 parts by weight of trade name: Novatec (registered trademark) PP, grade name: EA9HD (propylene homopolymer with Ziegler-Natta catalyst, MFR (230°C and a load of 2.16 kg) = 0.4 g/10 minutes) manufactured by Japan Polypropylene Corporation, and mixed with a Henschel mixer. The obtained mixture was melt extruded using a "KZW-25" twin-screw extruder manufactured by TECHNOVEL CORPORATION, having a screw diameter of 25 mm, under the conditions of a screw rotation speed: 300rpm, and kneading temperatures: C1/C2/C3 to C7/head/die = 150°C/180°C/230°C/230°C/180°C from the bottom of the hopper, to obtain polypropylene pellets. An MFR of the obtained pellets was 10 g/10 minutes.

A-2: 0.025 parts by weight of 2,5-dimethyl-2,5-di(t-butylperoxy)hexane, which is an organic peroxide, was added to 100 parts by weight of trade name: Novatec (registered trademark) PP, grade name: FY6H (propylene homopolymer with Ziegler-Natta catalyst, MFR (230°C and a load of 2.16 kg) = 1.8 g/10 minutes) manufactured by Japan Polypropylene Corporation, and mixed with a Henschel mixer. Polypropylene pellets were obtained by the same method as in Polypropylene (A-1) except that the obtained mixture was used. An MFR of the obtained pellets was 11.8 g/10 minutes.

A-3: 0.007 parts by weight of 2,5-dimethyl-2,5-di(t-butylperoxy)hexane, which is an organic peroxide, was added to 100 parts by weight of trade name: Novatec (registered trademark) PP, grade name: FL1105F (propylene homopolymer with Ziegler-Natta catalyst, MFR (230°C and a load of 2.16 kg) = 3.5 g/10 minutes) manufactured by Japan Polypropylene Corporation, and mixed with a Henschel mixer. Polypropylene pellets were obtained by the same method as in Polypropylene (A-1) except that the obtained mixture was used. An MFR of the obtained pellets was 7.3 g/10 minutes.

A-4: 0.014 parts by weight of 2,5-dimethyl-2,5-di(t-butylperoxy)hexane, which is an organic peroxide, was added to 100 parts by weight of trade name: Novatec (registered trademark) PP, grade name: FL1105F (propylene homopolymer with Ziegler-Natta catalyst, MFR (230°C and a load of 2.16 kg) = 3.5 g/10 minutes) manufactured by Japan Polypropylene Corporation, and mixed with a Henschel mixer. Polypropylene pellets were obtained by the same method as in Polypropylene (A-1) except that the obtained mixture was used. An MFR of the obtained pellets was 10.1 g/10 minutes.

A-5: 0.020 parts by weight of 2,5-dimethyl-2,5-di(t-butylperoxy)hexane, which is an organic peroxide, was added to 100 parts by weight of trade name: Novatec (registered trademark) PP, grade name: FL1105F (propylene homopolymer with Ziegler-Natta catalyst, MFR (230°C and a load of 2.16 kg) = 3.5 g/10 minutes) manufactured by Japan Polypropylene Corporation, and mixed with a Henschel mixer. Polypropylene pellets were obtained by the same method as in Polypropylene (A-1) except that the obtained mixture was used. An MFR of the obtained pellets was 13.1 g/10 minutes.

### [Propylene polymer]

B-1: Trade name: Novatec (registered trademark) PP, grade name: SA3D (propylene homopolymer with Ziegler-Natta catalyst, MFR (230°C and a load of 2.16 kg) = 11 g/10 minutes) manufactured by Japan Polypropylene Corporation
B-2: Trade name: Novatec (registered trademark) PP, grade name: FL1105F (propylene homopolymer with Ziegler-Natta catalyst, MFR (230°C and a load of 2.16 kg) = 3.5 g/10 minutes) manufactured by Japan Polypropylene Corporation
B-3: Trade name: Novatec (registered trademark) PP, grade name: FL4 (propylene homopolymer with Ziegler-Natta catalyst, MFR (230°C and a load of 2.16 kg) = 4.2 g/10 minutes) manufactured by Japan Polypropylene Corporation
B-4: Trade name: Novatec (registered trademark) PP, grade name: FL203D (propylene homopolymer with Ziegler-Natta catalyst, MFR (230°C and a load of 2.16 kg) = 3.0 g/10 minutes) manufactured by Japan Polypropylene Corporation
B-5: 0.003 parts by weight of 2,5-dimethyl-2,5-di(t-butylperoxy)hexane, which is an organic peroxide, was added to 100 parts by weight of trade name: Novatec (registered trademark) PP, grade name: FL1105F (propylene homopolymer with Ziegler-Natta catalyst, MFR (230°C and a load of 2.16 kg) = 3.5 g/10 minutes) manufactured by Japan Polypropylene Corporation, and mixed with a Henschel mixer. Pellets of a propylene polymer were obtained by the same method as in Polypropylene (A-1) except that the obtained mixture was used. An MFR of the obtained pellets was 5.2 g/10 minutes.

### Example 1

Polypropylene (A-1) was charged into each layer of a three-layer co-extruder, melt extruded at a resin temperature of 240°C in each layer, and then the resultant film was rapidly cooled by a cooling roll at 30°C to produce an unoriented film of one kind and three layers. The obtained unoriented film was subjected to a biaxially stretching film forming machine (tenter) manufactured by Mitsubishi Heavy Industries, Ltd., whose roll temperature was adjusted to 110°C, to obtain a biaxially oriented film.

The extrusion conditions, the stretching conditions, and the thickness of the film after biaxially stretching were as follows.

Extrusion conditions: extrusion temperature: 240°C, die width: 300 mm, lip opening: 2.0 mm, cooling roll temperature: 30°C, and cooling roll speed: 3 m/minute.

Stretching conditions: stretching roll temperature: 110°C, stretching ratio in MD direction: 5 times, stretching ratio in TD direction: 8 times, pick-up speed: 15 m/minute, tenter chamber temperature: 165°C in all the three zones of preheating, stretching and heat setting.

Film thickness: Total thickness: 20 µm. Among them, the thickness of each of the first and third layers is 2 µm.

### Example 2

In Example 1, Polypropylene (A-1) was replaced with Polypropylene (A-2) to obtain a biaxially oriented film of Example 2.

### Example 3

In Example 1, Polypropylene (A-1) was replaced with Polypropylene (A-3) to obtain a biaxially oriented film of Example 3.

### Example 4

In Example 1, Polypropylene (A-1) was replaced with Polypropylene (A-4) to obtain a biaxially oriented film of Example 4.

### Example 5

In Example 1, Polypropylene (A-1) was replaced with Polypropylene (A-5) to obtain a biaxially oriented film of Example 5.

### Comparative Example 1

In Example 1, Polypropylene (A-1) was replaced with Propylene polymer (B-1) to obtain a biaxially oriented film of Comparative Example 1.

### Comparative Example 2

In Example 1, Polypropylene (A-1) was replaced with Propylene polymer (B-2) to obtain a biaxially oriented film of Comparative Example 2.

### Comparative Example 3

In Example 1, Polypropylene (A-1) was replaced with Propylene polymer (B-3) to obtain a biaxially oriented film of Comparative Example 3.

### Comparative Example 4

In Example 1, Polypropylene (A-1) was replaced with Propylene polymer (B-4) to obtain a biaxially oriented film of Comparative Example 4.

### Comparative Example 5

In Example 1, Polypropylene (A-1) was replaced with Propylene polymer (B-5) to obtain a biaxially oriented film of Comparative Example 5.

The physical properties of Polypropylenes and Propylene polymers used in Examples and Comparative Examples as well as those of the biaxially oriented films obtained from them are shown in Table 1.

### [Table 1]

**Table 1**

| | | | Example 1 | Example 2 | Example 3 | Example 4 | Example 5 | Comparative Example 1 | Comparative Example 2 | Comparative Example 3 | Comparative Example 4 | Com parative Example 5 |
|---|---|---|---|---|---|---|---|---|---|---|---|---|
| Polypropylene or Propylene polymer | | | A-1 | A-2 | A-3 | A-4 | A-5 | B-1 | B-2 | B-3 | B-4 | B-5 |
| Pellet MFR g/10min | | | 10 | 11.8 | 7.3 | 10.1 | 13.1 | 11 | 3.5 | 4.2 | 3.0 | 5.2 |
| Mn | | | 68,000 | 51,000 | 69,000 | 48,000 | 57,000 | 35,000 | 67,000 | 57,700 | 73,000 | 58,000 |
| Mw | | | 198,000 | 204,000 | 235,000 | 219,000 | 199,000 | 217,000 | 329,000 | 293,000 | 368,000 | 269,000 |
| Mw/Mn | | | 2.9 | 4.0 | 3.4 | 4.6 | 3.5 | 6.2 | 4.9 | 5.1 | 5.0 | 4.6 |
| *γ* wt% | | | 0.9 | 1.2 | 2.8 | 1.7 | 1.1 | 2.5 | 5.1 | 4.9 | 5.1 | 3.6 |
| (M_{w}/M_{N} · *γ* | | | 2.6 | 4.8 | 9.5 | 7.8 | 3.9 | 16 | 25 | 25 | 26 | 17 |
| Satisfaction of relational expression | | | ○ | ○ | ○ | ○ | ○ | × | × | × | × | × |
| mmmm | | % | 95.7 | 96.7 | 97.3 | 97.2 | 97.2 | 97.0 | 97.3 | 97.3 | 92.2 | 97.3 |
| Film thichness | | *µ* m | 19 | 18 | 18 | 18 | 19 | 19 | 19 | 20 | 20 | 18 |
| Glossiness | | % | 145 | 150 | 150 | 147 | 150 | 142 | 143 | 149 | 150 | 161 |
| Haze | | % | 0.5 | 0.7 | 0.4 | 0.5 | 1.3 | 0.7 | 1.4 | 1.5 | 0.4 | 0.4 |
| Young's modulus | MD | MPa | 2,570 | 2,530 | 2,560 | 2,480 | 2,540 | 2,650 | 2,520 | 2,600 | 2,060 | 2,650 |
| | TD | MPa | 7,020 | 6,810 | 6,080 | 6,350 | 6,600 | 5,945 | 5,670 | 5,520 | 4,680 | 6,120 |
| | Evaluation | | ⊚ | ⊚ | ○ | ○ | ⊚ | ○ | ○ | × | × × | ○ |
| Heat shrinkage rate 150°C | MD | % | 2.2 | 1.8 | 3.3 | 1.9 | 2.7 | 3.7 | 4.0 | 3.4 | 8.5 | 3.7 |
| | TD | % | 2.7 | 2.1 | 2.9 | 1.9 | 0.9 | 5.3 | 6.6 | 5.4 | 13.1 | 3.9 |
| | Evaluation | | ○ | ○ | ○ | ○ | ⊚ | × | × | × | × × | × |

### [Discussion of Results of Examples and Comparative Examples]

From Table 1, it can be seen that the biaxially oriented films of Examples 1 to 5 formed from a polypropylene satisfying 0.4 < (Mw/Mn) · γ < 10 had an extremely high Young's modulus in the TD direction, small heat shrinkage rates in both the MD and TD directions, and excellent rigidity and heat resistance.

On the other hand, the biaxially oriented films of Comparative Examples 1 to 5 formed from a propylene polymer having (Mw/Mn) · γ of 10 or more had an inferior Young's modulus in the TD direction and inferior heat shrinkage rates in the MD and TD directions.

### Industrial Applicability

The polypropylene composition can be suitably used as a raw material for an oriented film.

## Claims

1. A polypropylene composition for an oriented film comprising a polypropylene selected from the group consisting of a propylene homopolymer and a propylene-ethylene copolymer containing units derived from ethylene in an amount of 1.0% by weight or less, wherein the polypropylene satisfies the following requirement (1).
(1) A molecular weight distribution Mw/Mn as determined by GPC measurement and an amount γ (% by weight) of components having a molecular weight of 1 million or more as determined by GPC measurement satisfy 0.4 < (Mw/Mn) · γ < 10.

2. The polypropylene composition for an oriented film according to claim 1, wherein the polypropylene satisfies the following requirement (2).
(2) A melt flow rate measured in accordance with JIS K7210 at 230°C and under a load of 2.16 kg is 3.5 to 20 g/10 minutes.

3. The polypropylene composition for an oriented film according to claim 1 or 2, wherein the polypropylene satisfies the following requirement (3).
(3) An isotactic mesopentad fraction (mmmm) measured by ¹³C-NMR is 95% or more.

4. The polypropylene composition for an oriented film according to claim 3, wherein the polypropylene satisfies the following requirement (4).
(4) The Mw/Mn satisfies 2.0 < Mw/Mn < 5.0.

5. The polypropylene composition for an oriented film according to claim 4, wherein the polypropylene satisfies the following requirement (5).
(5) The γ is less than 5.0% by weight.

6. An oriented film comprising the polypropylene composition for an oriented film according to any one of claims 1 to 5.

7. The oriented film according to claim 6, wherein a heat shrinkage rate of the oriented film, measured in accordance with JIS K6782 at 150°C for 30 minutes, is 0 to 3.5% in the MD direction and 0 to 5.0% in the TD direction.

8. The oriented film according to claim 7, wherein a Young's modulus of the oriented film, measured in accordance with JIS K7127, is 5.6 GPa or more in the TD direction.
